# EUROPEAN PATENT SPECIFICATION

(11) **EP 1 245 540 B1**
(45) Date of publication and mention of the grant of the patent: **22.11.2006**
(21) Application number: 02006756.7
(22) Date of filing: 25.03.2002
(51) Int. Cl.: C03B 7/084

(54) **Refractory tube for forming gobs of molten glass**
Feuerfestes Rohr zum Erzeugen von Tropfen aus geschmolzenem Glas
Tube réfractaire pour la formation de gouttes de verre en fusion

(30) Priority: 29.03.2001 IT MI010666
(43) Date of publication of application: 02.10.2002
(73) Proprietor: S.I.G.M.A. S.r.l., 22070 Locate Varesino (Como) (IT)
(72) Inventor: Mari, Roberto, 22070 Locate Varesino (Como) (IT)
(74) Representative: Lecce, Giovanni

(56) References cited:
- EP-A- 0 978 485
- BE-A- 662 920
- FR-A- 529 612
- US-A- 1 631 061
- US-A- 1 810 736

## Description

This invention refers to a refractory tube which contributes to the formation of fused glass gobs.

In particular, this invention refers to a refractory tube which contributes to the formation of sized fused glass gobs to feed a mould for the production of containers or hollow items according to the blow, press or press-blow process.

It is known that the process of the production of blown/pressed hollow items includes the following steps:
- heating and melting of the glass or its components in an homogeneous blend;
- refining of fused glass at a higher temperature than the melting one to remove gaseous/vapourous decomposition and dehydration products and the bubbles which they can make;
- creation of sized fused glass gobs;
- feeding moulds with these gobs and
- forming of the hollow item through a blow, press or press-blow process.

The melting is made in furnaces, which can be crucible or melting tanks, at the highest and most homogeneous temperatures in order to favour melting and refining processes. From the tank, the fused and refined mass is carried through forehearths to feeders from which calibrated fused glass gobs for the forming process are taken out.

A combined system including a spout, a tube, a plunger and an orifice ring, all of them in refractory material, is used to create the above mentioned gobs and to regulate the quantity of fused glass of each gob and in order to obtain weight of each gob equal and constant.

For about a third of its length, the tube is immersed in the fused glass of the feeder at a temperature between 1000°C and 1300°C over a period of time varying from 10 to 45 minutes.

In spite of the skills generated in working with present tubes, many drawbacks still arise.

One of these drawbacks is that the tubes can have horizontal and/or vertical breaks and/or cracks which can bring a halt to production.

The cracking of the tube results from stress within the material due to the temperature gradient along the tube and any change in temperature.

The situation gets worse considering that about one third of the tube is immersed in the fused glass, about one third is exposed to the flame of the burners and about one third to lower temperatures. This means that temperature along the length of the tubes changes from 1300°C of the lower part immersed in the fused glass to 150-200° of the opposite part and this promotes stress and later breaks and/or cracks.

Another drawbacks is due to the thermal inhomogeneity of the fused glass, i.e. the temperature of the fused glass inside and outside the refractory tube. This results in a decrease in the production speed and an increase in the reject level because of the presence of gobs with different weights and/or defects on the finished hollow items.

Besides, during the changing of a tube, the fused glass touches the refractory surface, which is obviously colder, and the resulting rapid change in glass temperature causes defects on the finished item such as seeds and blisters.

An approach to solve these drawbacks could be to pre-heat the tube before immersing it in the fused glass. Pre-heating is however not easy to industrially carry out both because of the position of the tube in operation and of its handling or moving.

US-A-1 631 061 discloses an apparatus for controlling the flow of molten glass through a discharge aperture comprising a discharge cup having a discharge aperture, a reciprocating plunger or a rotary screw and a sleeve surrounding such plunger or screw. The walls of the tube are corrugated or provided with ribs, grooves or beads to increase the effect of the adhesion between the sleeve and the molten glass.

The longitudinal grooves do not extend along the whole length of the sleeve and the sleeve is not provided with through holes.

BE-A-662920 discloses a rotating tube for homogenising the fused glass, and the upper part of the tube can be optionally provided with through holes that are not arranged in longitudinal rows, and neither discloses nor suggests the combination of longitudinal grooves extending along the whole length of the tube and through holes arranged in longitudinal rows.

The object of the present invention is to remedy the above mentioned drawbacks.

The above mentioned objects are accomplished through a refractory tube as claimed in claim 1. Additional advantages are recited in the dependent claims.

In detail, the object of the present invention is to provide a refractory tube which facilitates the creation of homogeneous fused glass gobs, with equal and constant weight, and wherein the temperature of the glass inside and outside the tube is almost the same.

Another object of the present invention is to provide a refractory tube with a reduced tendency to the creation of stress provoked by the different expansion along the longitudinal axis and the circumference of the refractory tube.

A further object of the present invention is to provide a refractory tube which can heat quickly and homogeneously all along the surface, diminishing the difference in temperature between the upper part, which is not immersed in the fused glass, and the lower part, which is immersed in the fused glass.

In its general aspect, the present invention allows to achieve these and other objects by diminishing the refractory mass which constitutes the tube, as defined in claim 1.

This mass decrease is obtained by forming longitudinal grooves on the circumference and along the whole length of the tube, and more than six through holes in the whole upper portion of the tube which is not immersed in the fused glass, which holes are arranged in longitudinal rows.

The grooves can have any section and/or form, as, for instance, square, rectangular, polygonal, semicircular, triangular, etc. and their number is not critical , even if it is preferred that their number be the highest possible in order to realise the greatest thermal exchange.

At least two grooves and preferably from 6 to 20 are preferred.

Said grooves can be arranged equidistant among them or in a casual way.

The through holes can have the same diameter or, preferably, different diameters and can be homogeneously or not homogeneously distributed along all the surface of the upper part of the tube.

Said through holes are preferably arranged in longitudinal rows and the number of rows is at least two, and preferably between three and ten or more according to the height of the tube.

The constructional and functional characteristics of the refractory tube of the present invention can be better understood from the following description which refers to the enclosed sheet of drawings representing some embodiments, given only for clarification or exemplification but not limitative aim, and where:
Fig. 1 is a schematic front perspective view of the refractory tube of the present invention;
Fig. 2 is a schematic plan view of the refractory tube of Fig. 1;
Fig. 3 is a schematic view of a longitudinal section of the refractory tube referring to Fig. 1 and 2 obtained with a plane going through the line A-A of Fig. 2;
Fig. 4 is a schematic front perspective view of another embodiment of the refractory tube of the present invention;
Fig. 5 is a schematic plan view of the refractory tube of Fig. 4;
Fig. 6 is a schematic view of a longitudinal section of the refractory tube referring to Fig. 4 and 5 obtained with a plane going through the line B-B of Fig. 5;
Fig. 7 is a schematic lateral perspective view of another embodiment of the refractory tube of the present invention;
Fig. 8 is a schematic plan view of the refractory tube of Fig. 7;
Fig. 9 is a schematic longitudinal section of the refractory tube referring to Fig. 7 and 8 obtained with a plane going through the line C-C of Fig. 8;

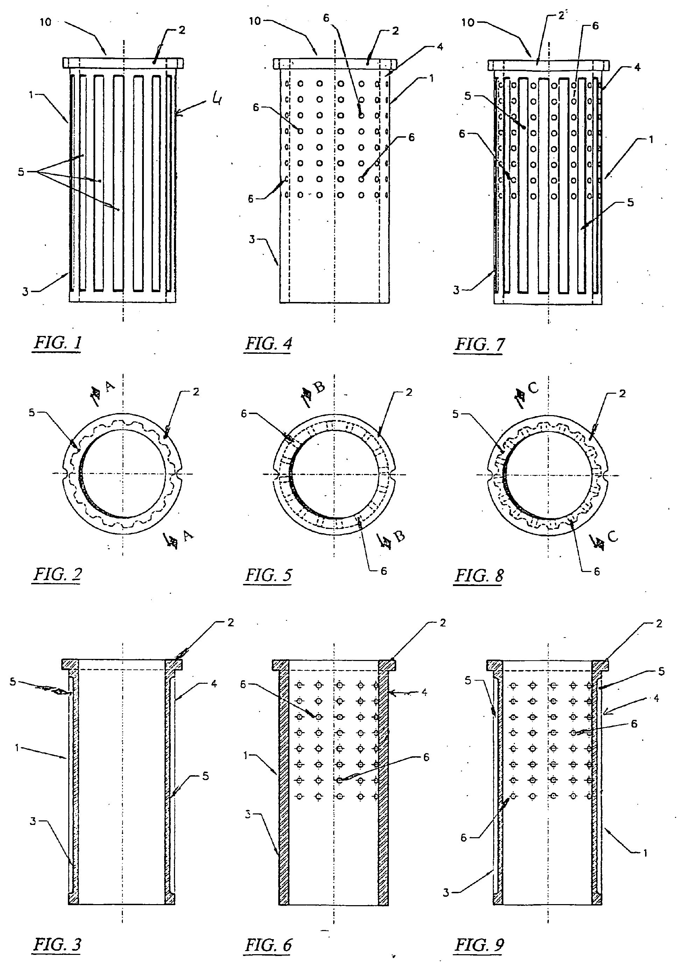

With particular reference to these figures, the refractory tube marked as 10, comprises a cylindrical surface 1 provided with a flange or griping collar 2 at one of the ends. The cylindrical surface 1 includes a lower part 3, which is immersed in the fused glass, and an upper part 4, which is not immersed in the fused glass. According to the present invention and as shown from Fig. 1 to 3, all the cylindrical surface 1 is provided with grooves or flutes 5 extending along all the length of the tube 10. These grooves 5 can have any section and/or form, as for instance square, rectangular, polygonal, semicircular, triangular, etc. The number of grooves 5 is not critical, but it is preferred that it is the highest possible in order to create the greatest thermal exchange. Generally, the grooves 5 are at least 2 and preferably between 6 and 20 or more depending on the diameter of the tube 10. These grooves 5 are preferably equidistant among them.

Figures 4 and 6 show a second embodiment of the refractory tube 10 of the present invention.

According to this embodiment, all the upper part 4 of the circular surface 1 is provided with more than six through holes 6. These through holes 6 can have the same diameter or different diameters and can be arranged in an homogeneous or unhomogeneous way. The lay-out of the through holes 6 in longitudinal equidistant rows is preferred and the number of rows is at least two, and preferably from three to ten or more depending on the height of the tube.

Figures 7 - 9 show another embodiment of the refractory tube of the present invention.

In this embodiment, all the cylindrical surface 1 of the tube 10 is provided with grooves 5 extending along the whole length of the tube and the upper part 4 of the cylindrical surface 1, which is not immersed in the fused glass, is provided with through holes 6.

Also in this embodiment, grooves 5 can have any section and/or form, as, for instance, square, rectangular, polygonal, semicircular, triangular, etc. and their number is not critical. Preferably, grooves 5 are at least 2 and preferably from 6 to 20 or more depending on the diameter of the tube 10 and they are arranged preferably equidistant.

The through holes 6 can have the same diameter or different diameters and can be arranged on longitudinal equidistant rows. The number of the rows is at least two, and preferably from three to ten or more depending on the height of the tube.

The advantages derived from the tube of the present invention are: The presence of the through holes and/or grooves allows to reduce greatly the refractory mass of the tube favouring both the speed with which thermal equilibrium is achieved, diminishing stress due to thermal expansion of the material. The decrease of the thickness of the refractory in contact with the glass results in a decrease in the differences of glass temperature inside and outside the tube.

The presence of the through holes allows ventilation inside the tube homogeneizing the glass inside the tube itself and allows also to heat the upper part 4 of the tube which is not immersed in the glass by creating a chimney effect and contributing in the decrease of the difference of temperature between the lower 3 and upper 4 parts.

The results obtained with the refractory tube of the present invention are a decrease in tube cracking, an improved thermal homogeneity within the glass gob, an increase in the production speed and an important decrease in the production reject level. Although the present invention has been described with reference to some embodiments given as examples, but not restricted to said examples, various changes and variations will be apparent to a technician in view of the above description. Consequently, the present invention intends to include all the changes and variations which fall within the scope of the appended claims.

## Claims

1. A refractory tube usable in the formation of fused glass gobs comprising a cylindrical wall (1) having a lower part (3) which is immersed in the fused glass and an upper part (4) which is not immersed in the fused glass when the tube is in operation, the external surface of the tube being provided with longitudinal grooves (5),
**characterized in that** said longitudinal grooves extend along the whole length of the tube, and the whole upper part (4) of the cylindrical wall (1), which is not immersed in the fused glass when the tube is in operation, is provided with more than six through holes (6) arranged in longitudinal rows.

2. A refractory tube as claimed in claim 1, **characterized in that** the grooves (5) have square, rectangular, polygonal, semicircular or triangular section.

3. A refractory tube as claimed in claim 1 or 2, **characterized in that** the number of said grooves (5) is at least 2.

4. A refractory tube as claimed in claim 1, **characterized in that** the number of said grooves (5) is from 6 to 20.

5. A refractory tube as claimed in any of the preceding claims, **characterized in that** said grooves are arranged equally spaced from each other.

6. A refractory tube as claimed in any of the preceding claims, **characterized in that** said through holes (6) have the same diameter.

7. A refractory tube as claimed in any of the preceding claims 1 to 5, **characterized in that** said through holes (6) have different diameters.

8. A refractory tube as claimed in any of the preceding claims, **characterized in that** said through holes (6) are arranged in longitudinal equidistant rows.

9. A refractory tube as claimed in any of the preceding claims **characterized in that** the number of said rows is at least two, and preferably is from three to ten.

## Patentansprüche

1. Refraktorisches Rohr, das bei der Ausbildung von geschmolzenen Glasklumpen verwendbar ist, umfassend eine zylindrische Wand (1) mit einem unteren Teil (3), der in dem geschmolzenen Glas versenkt ist, und einem oberen Teil (4), der nicht in dem geschmolzenen Glas versenkt ist, wenn das Rohr in Betrieb ist, wobei die äußere Oberfläche des Rohrs mit längsgerichteten Nuten (5) versehen ist,
**dadurch gekennzeichnet, dass** die längsgerichteten Nuten sich entlang der gesamten Länge des Rohrs erstrecken, dass der gesamte obere Teil (4) der zylindrischen Wand (1), welcher nicht in dem geschmolzenen Glas versenkt ist, wenn das Rohr in Betrieb ist, mit mehr als sechs Durchgangslöchern (6) versehen ist, die in längsgerichteten Reihen angeordnet sind.

2. Refraktorisches Rohr nach Anspruch 1, **dadurch gekennzeichnet, dass** die Nuten (5) einen quadratischen, rechteckigen, polygonalen, halbkreisförmigen oder dreieckigen Querschnitt aufweisen.

3. Refraktorisches Rohr nach Anspruch 1 oder 2, **dadurch gekennzeichnet, dass** die Anzahl der Nuten (5) zumindest zwei ist.

4. Refraktorisches Rohr nach Anspruch 1 oder 2, **dadurch gekennzeichnet, dass** die Anzahl von Nuten (5) von 6 bis 20 ist.

5. Refraktorisches Rohr nach irgendeinem der vorhergehenden Ansprüche, **dadurch gekennzeichnet, dass** die Nuten mit gleichen Abständen voneinander angeordnet sind.

6. Refraktorisches Rohr nach irgendeinem der vorhergehenden Ansprüche, **dadurch gekennzeichnet, dass** die Durchgangslöcher (6) den gleichen Durchmesser aufweisen.

7. Refraktorisches Rohr nach irgendeinem der vorhergehenden Ansprüche 1 bis 5, **dadurch gekennzeichnet, dass** die Durchgangslöcher (6) unterschiedliche Durchmesser aufweisen.

8. Refraktorisches Rohr nach irgendeinem der vorhergehenden Ansprüche, **dadurch gekennzeichnet, dass** die Durchgangslöcher (6) in längsgerichteten äquidistanten Reihen angeordnet sind.

9. Refraktorisches Rohr nach irgendeinem der vorhergehenden Ansprüche, **dadurch gekennzeichnet, dass** die Anzahl der Reihen zumindest zwei ist und vorzugsweise von drei bis zehn ist.

## Revendications

1. Tube réfractaire utilisable dans la formation de paraisons de verre fondu comprenant une paroi cylindrique (1) incluant une partie inférieure (3) qui est immergée dans le verre fondu et une partie supérieure (4) qui n'est pas immergée dans le verre fondu lorsque le tube est en cours de fonctionnement, la surface externe du tube comportant des rainures longitudinales (5),
**caractérisé en ce que** lesdites rainures longitudinales s'étendent sur toute la longueur du tube, et que la partie supérieure totale (4) de la paroi cylindrique (1), qui n'est pas immergée dans le verre fondu lorsque le tube est en cours de fonctionnement, comporte plus de 6 orifices traversants (6) agencés en lignes longitudinales.

2. Tube réfractaire selon la revendication 1, **caractérisé en ce que** la section transversale des rainures (5) est carrée, rectangulaire, polygonale, semi-circulaire ou triangulaire.

3. Tube réfractaire selon la revendication 1 ou 2, **caractérisé en ce que** le nombre desdites rainures (5) est au moins de 2.

4. Tube réfractaire selon la revendication 1, **caractérisé en ce que** le nombre desdites rainures (5) est compris entre 6 et 20.

5. Tube réfractaire selon l'une quelconque des revendications précédentes, **caractérisé en ce que** lesdites rainures sont également espacées les unes des autres.

6. Tube réfractaire selon l'une quelconque des revendications précédentes, **caractérisé en ce que** le diamètre est le même pour tous lesdits orifices traversants (6).

7. Tube réfractaire selon l'une quelconque des revendications 1 à 5, **caractérisé en ce que** les diamètres desdits orifices traversants (6) sont différents.

8. Tube réfractaire selon l'une quelconque des revendications précédentes, **caractérisé en ce que** lesdits orifices traversants (6) sont agencés en lignes longitudinales équidistantes.

9. Tube réfractaire selon l'une quelconque des revendications précédentes, **caractérisé en ce que** le nombre desdites lignes est au moins de deux, et de préférence de trois à dix.
